Europäisches Patentamt

European Patent Office

Office européen des brevets

(19)

(11) Numéro de publication : **0 080 915**
**B1**

(12) # FASCICULE DE BREVET EUROPÉEN

(45) Date de publication du fascicule du brevet :
30.01.85

(51) Int. Cl.⁴ : **H 04 N 3/18**

(21) Numéro de dépôt : **82402056.4**

(22) Date de dépôt : **09.11.82**

(54) Circuit de commande de balayage de récepteur de télévision, à démarrage progressif.

(30) Priorité : **27.11.81 FR 8122271**

(43) Date de publication de la demande :
**08.06.83 Bulletin 83/23**

(45) Mention de la délivrance du brevet :
**30.01.85 Bulletin 85/05**

(84) Etats contractants désignés :
**DE FR GB IT NL**

(56) Documents cités :
**GB-A- 1 181 350**
**US-A- 3 959 714**
**ELECTRONIC APPLICATION BULLETIN, vol. 35, no. 4, février 1979, pages 188-210, N.V.Philips', Eindhoven (NL); "A mains-isolated switching-mode power supply for TV receivers"**

(73) Titulaire : **THOMSON-CSF**
**173, Boulevard Haussmann**
**F-75379 Paris Cedex 08 (FR)**

(72) Inventeur : **Van Den Driessche, Michel**
**THOMSON-CSF SCPI 173, bld Haussmann**
**F-75379 Paris Cedex 08 (FR)**

(74) Mandataire : **Guérin, Michel et al**
**THOMSON-CSF SCPI 173, Bld Haussmann**
**F-75379 Paris Cédex 08 (FR)**

## Description

La présente invention concerne les récepteurs de télévision et notamment les circuits de commande de balayage du spot lumineux produit sur l'écran du récepteur. Plus particulièrement, on s'intéresse selon l'invention à la manière dont s'effectue le démarrage de ces circuits lors de la misê sous tension du récepteur.

Il est habituel que le récepteur possède un transformateur dit « transformateur de balayage horizontal » à partir duquel s'imbriquent plusieurs circuits étroitement interconnectés parmi lesquels on trouve :

— une alimentation stabilisée fournissant une tension continue régulée d'une centaine de volts pour alimenter ce transformateur,

— un circuit de commande de balayage horizontal fournissant des créneaux périodiques à la base d'un transistor en série avec l'enroulement primaire du transformateur, une bobine de déviation horizontale étant reliée à ce transistor,

— un circuit de commande de déviation verticale utilisant un enroulement secondaire du transformateur de balayage horizontal comme source d'alimentation pour produire une rampe de tension périodique pour le balayage vertical,

— un circuit à très haute tension utilisant un enroulement secondaire du transformateur pour créer dans le tube cathodique un potentiel élevé pour la production et l'accélération d'un faisceau électronique.

Dans un exemple de réalisation décrit dans la demande de brevet français 81 08 337 du 27 avril 1981 au nom de la demanderesse, on peut voir qu'il y a une étroite interconnexion entre ces divers circuits et il est nécessaire de prévoir précisément comment s'effectue leur démarrage ou leur arrêt en tenant compte des interactions mutuelles entre les circuits.

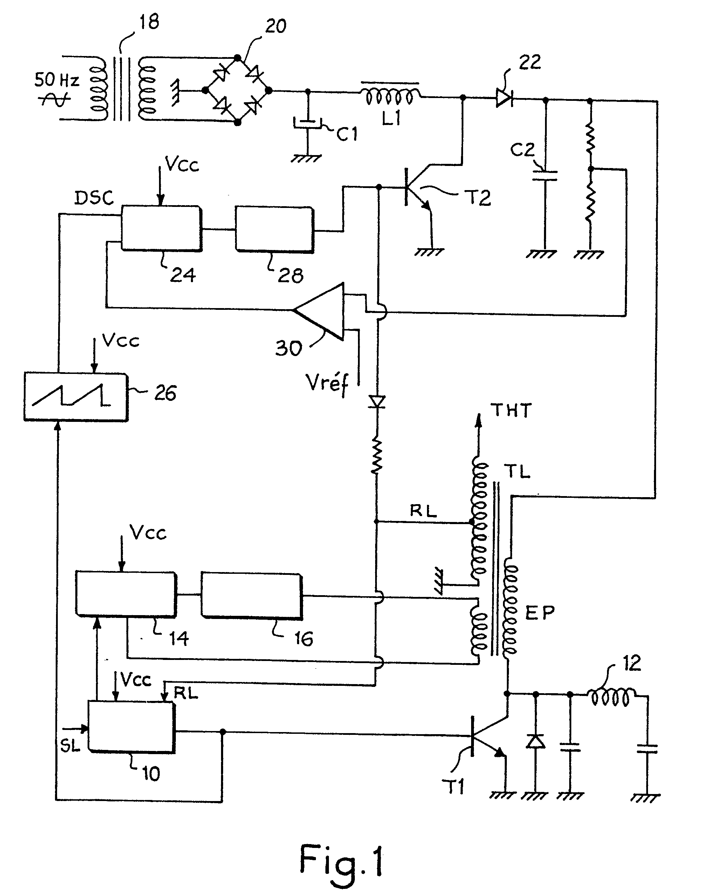

La figure 1 représente un schéma général de circuit de balayage horizontal et vertical, avec une alimentation régulée à découpage, circuit auquel l'invention peut s'appliquer tout particulièrement. On peut trouver plus de détail sur ce circuit dans la demande précitée 81 08 337. On va cependant en rappeler la structure générale pour mieux faire comprendre les buts de la présente invention.

Le transformateur de balayage horizontal, désigné par TL est pourvu d'un enroulement primaire EP relié d'une part au collecteur d'un transistor T1 dont l'émetteur est à la masse et d'autre part à la sortie d'une alimentation stabilisée à découpage, elle-même alimentée par le courant alternatif du secteur.

La base du transistor T1 reçoit d'un circuit de commande de balayage horizontal 10 des créneaux périodiques synchronisés sur un signal de synchronisation SL extrait (par un séparateur de synchro non représenté) du signal vidéo reçu par le récepteur.

Le collecteur du transistor T1 est relié à une bobine de déviation horizontale 12 qui produit une déflexion périodique du faisceau électronique du tube à chaque commutation du transistor T1.

Le transformateur TL comporte un ou plusieurs enroulements secondaires, par exemple un enroulement pour produire une très haute tension THT et un enroulement pour l'alimentation d'un circuit de déviation verticale. Sur l'un de ces enroulements est prélevé un signal dit « retour ligne » RL qui est une impulsion négative produite à chaque retour du faisceau sous l'effet du blocage brutal du transistor T1. Cette impulsion RL sert au circuit de balayage horizontal 10 car on synchronise le balayage sur le signal de synchronisation SL en décalant les créneaux de commande du transistor T1 jusqu'à synchroniser les signaux SL et RL. L'impulsion RL sert aussi au fonctionnement de l'alimentation à découpage.

Le circuit de déviation verticale, 14, est relié à une bobine de déviation verticale 16 et à un enroulement secondaire du transformateur TL qui l'alimente. Ce circuit 14 est couplé au circuit de commande de balayage horizontal pour assurer la correspondance nécessaire entre le balayage de ligne et le balayage de trame.

L'alimentation à découpage comprend, à partir d'un transformateur 18 alimenté par le secteur, un pont de redressement 20 suivi d'une capacité de filtrage C1 et d'une inductance L1 en série avec le collecteur d'un transistor T2 dont l'émetteur est à la masse.

Le collecteur du transistor T2 est relié à l'anode d'une diode 22 dont la cathode est reliée à une capacité C2. La tension de sortie de l'alimentation est prise aux bornes de la capacité C2. Le fonctionnement de l'alimentation consiste en une commutation à haute fréquence (en fait à la fréquence du balayage horizontal) du transistor T2, grâce à des créneaux périodiques (période 64 microsecondes du balayage ligne).

La capacité C2 constitue un accumulateur d'énergie qui se décharge dans le circuit d'utilisation pendant que le transistor T2 est conducteur et qui se recharge à travers l'inductance L1 lorsque le transistor T2 est bloqué ; la largeur des créneaux se règle automatiquement de manière que la charge perdue à chaque mise en conduction du transistor T2 soit exactement compensée par la charge récupérée à chaque blocage.

La régulation se fait en prélevant en sortie de l'alimentation une tension de commande de régulation qui est comparée à une tension de référence stabilisée, la différence étant amplifiée par un amplificateur différentiel 30 et comparée dans un comparateur 24 à une tension périodique en dent de scie DSC produite par un générateur 26. Le générateur 26 fournit une dent de scie périodique à la fréquence de balayage de ligne et reçoit à cet effet du circuit de balayage horizontal 10 des créneaux à cette fréquence.

Le comparateur fournit ainsi des créneaux de largeur variable à cette fréquence, créneaux qui sont amplifiés dans un amplificateur 28 et appliqués à la base du transistor T2.

Enfin, étant donné que le transistor T2 doit bloquer à chaque période un courant important, on applique à sa base l'impulsion fortement négative du retour ligne RL issue du secondaire du transformateur TL ; cette impulsion RL est, comme on l'a dit, synchronisée avec les créneaux de balayage horizontal issus du circuit 10, donc avec les retours de la dent de scie DSC, de sorte qu'une impulsion négative favorisant le blocage du transistor T2 apparaît immédiatement après l'application d'une commande de blocage issue du comparateur 24.

Finalement, les circuits électroniques de commande sont alimentés par une basse tension continue Vcc qui peut être obtenue soit par redressement d'une fraction de la tension alternative du secteur, soit en prélevant une fraction de la tension continue en sortie de l'alimentation stabilisée à découpage, soit encore par une combinaison des deux.

Ayant ainsi montré les interconnexions étroites existant entre le circuit d'alimentation à découpage (travaillant à la fréquence de balayage horizontal), le circuit de balayage horizontal, le circuit de balayage vertical et même les circuits à très haute tension, on va maintenant exposer les buts que cherche à atteindre la présente invention.

Tout d'abord on veut que lorsque le balayage horizontal fonctionne (ce qui implique d'ailleurs l'apparition d'une très haute tension THT), le balayage vertical fonctionne également, faute de quoi on aboutit à créer sur l'écran une ligne horizontale brillante immobile qui finirait par griller la couche photosensible du tube.

Ensuite, au démarrage de l'alimentation à découpage, lors de la mise sous tension du récepteur, le système de régulation va tendre à faire engendrer par le comparateur 24 des créneaux de durée maximum jusqu'à ce que l'alimentation ait atteint sa tension nominale de sortie. Or le courant dans le transistor T2 croît linéairement (à cause de l'inductance L1) pendant la durée du créneau. On aboutit à une consommation de courant beaucoup trop importante dans le transistor pendant le démarrage de l'alimentation, avec un échauffement notable du transistor car il coupe ce courant élevé (plusieurs ampères) sous une tension également élevée (une centaine de volts). Une limitation de durée des créneaux est prévue de toute manière pour le fonctionnement normal de l'alimentation (par exemple en prévoyant que la tension de commande de régulation ne peut descendre au-dessous d'un certain seuil ; mais cette limitation, suffisante en fonctionnement normal, est insuffisante pour éliminer tout risque de destruction du transistor T2 pendant la phase de démarrage.

Outre ce problème de démarrage, il existe un problème d'arrêt des circuits de balayage. Il faut couper l'alimentation stabilisée avant de couper le balayage horizontal, l'absence de balayage entraînant un fonctionnement anormal de l'alimentation (suppression de la dent de scie et suppression du retour ligne permettant de bloquer efficacement le transistor T2). L'alimentation étant coupée, on peut alors couper le balayage, mais alors il faut couper simultanément le balayage horizontal et le balayage vertical et ceci ne doit en principe pas s'effectuer trop rapidement après la coupure de l'alimentation car il subsiste pendant un certain temps une très haute tension THT produisant un faisceau électronique qui doit balayer tout l'écran pour ne pas risquer de brûler un point central de celui-ci.

Enfin, dans des cas exceptionnels, tels que l'apparition d'une surtension en un point critique, on veut que l'alimentation et les commandes de balayage soient simultanément coupées d'urgence et redémarrent automatiquement sauf si ces surtensions se répètent trop rapidement.

Pour résoudre ces problèmes, la présente invention propose, dans un circuit de commande de balayage pourvu d'une alimentation à découpage qui comprend un interrupteur commandé (transistor T2) et un comparateur ou modulateur de phase (24) pour produire des créneaux de commande de cet interrupteur, le comparateur étant susceptible de recevoir sur une première entrée une tension de commande de régulation variable et sur une deuxième entrée une tension en dents de scie (DSC) pour produire des créneaux de largeur variable (tel que décrit dans le document US-A-3 959 714), disposée à l'entrée, un circuit de démarrage comprenant :

— une capacité,

— un moyen pour faire suivre rapidement à une première armature de la capacité le potentiel d'une source à basse tension (Vcc) lorsque cette basse tension croît à partir de zéro jusqu'à une valeur Vz,

— un moyen de transmission prioritaire ayant une première entrée reliée à la première armature de la capacité, une deuxième entrée recevant la tension de commande de régulation, et une sortie reliée à la première entrée du comparateur, pour appliquer prioritairement à cette dernière celle des deux tensions qui définira des créneaux de plus faible largeur pour la mise en conduction de l'interrupteur commandé, la valeur de la tension Vz étant choisie telle que lorsqu'elle est atteinte et que l'alimentation à découpage fonctionne, elle soit transmise prioritairement au comparateur et engendre des créneaux de durée beaucoup plus courte que leur durée maximale possible,

— un moyen pour charger ou décharger progressivement la capacité de manière que ladite première armature voie son potentiel se modifier progressivement jusqu'à cesser de devenir prioritaire.

Au démarrage, quelle que soit la tension de commande de régulation, les créneaux de commande de conduction du transistor T2 sont très courts puis ils s'élargissent à mesure de la décharge de la capacité jusqu'à ce que la tension de commande de régulation de l'alimentation prenne le relais pour établir les créneaux conformément au fonctionnement normal de l'alimentation à découpage.

De plus, on prévoit que la commande des circuits de balayage horizontal et vertical est inhibée si la basse tension est inférieure à un seuil (VS1) et que la commande de l'alimentation à découpage est inhibée tant que la basse tension n'a pas atteint un seuil VS2 plus grand que VS1.

Le moyen de transmission prioritaire peut comporter par exemple un couple de diodes ou de transistors.

D'autres caractéristiques et avantages de l'invention apparaîtront à la lecture de la description détaillée qui suit et qui est faite en référence aux dessins annexés dans lesquels :

la figure 1, déjà décrite, représente un schéma général de circuit de balayage de récepteur de télévision auquel la présente invention s'applique particulièrement,

la figure 2 représente le circuit de démarrage de l'invention,

la figure 3 représente un diagramme de tensions à la mise en route et à l'arrêt du récepteur,

la figure 4 représente un diagramme de tensions en cas de surtension,

la figure 5 représente un détail de circuit.

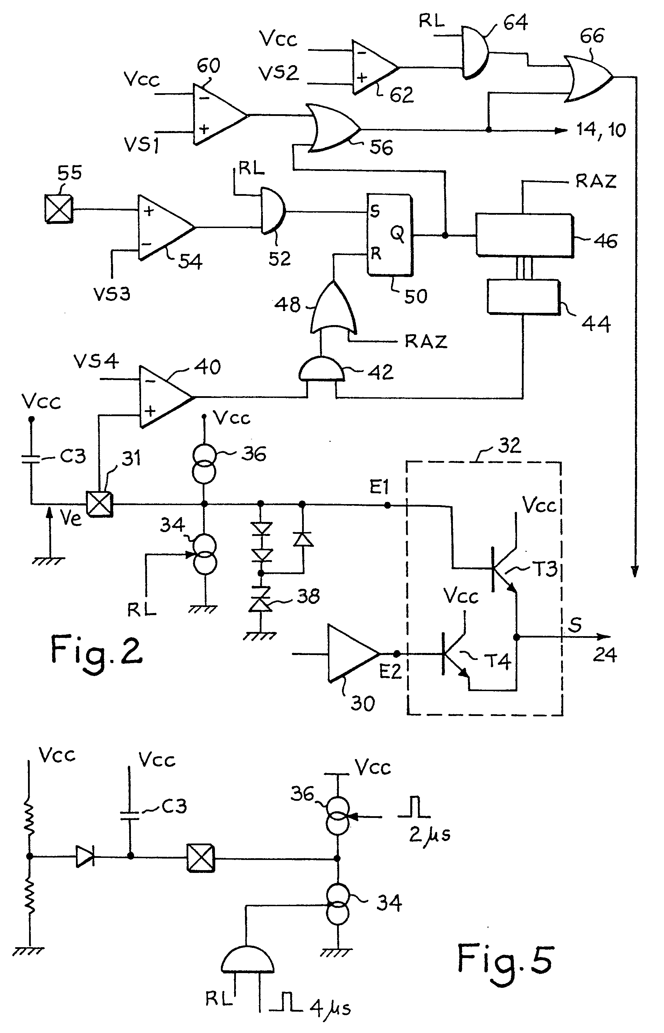

A la figure 2, on a représenté une capacité C3 ayant une première armature reliée à une borne de circuit 31 elle-même reliée à une entrée E1 d'un moyen de transmission prioritaire 32 qui possède une autre entrée E2 recevant la tension de commande de régulation de l'alimentation à découpage de la figure 1 (tension prélevée sur le pont diviseur placé en sortie de cette alimentation et amplifiée par l'amplificateur 30). La sortie S du moyen de transmission prioritaire est reliée à la première entrée du comparateur 24 (l'autre entrée recevant la tension en dent de scie DSC).

Le moyen de transmission prioritaire 32 transmet sur sa sortie S la plus forte des tensions appliquées en E1 et E2. Pour cela, ce moyen peut être constitué par exemple par deux transistors T3 et T4 montés en émetteurs suiveurs ; leurs émetteurs sont tous deux reliés à la sortie S, leurs bases sont reliées respectivement à l'entrée E1 et à l'entrée E2. En pratique, le transistor T4 pourra d'ailleurs faire partie de l'étage de sortie de l'amplificateur 30. Deux diodes à la place des jonctions base-émetteur pourraient aussi convenir.

La deuxième armature de la capacité C3 est reliée à une source de basse tension qui est de préférence la tension Vcc qui sert à alimenter l'ensemble des circuits de commande de balayage du récepteur. La valeur de Vcc peut être de 12 volts par exemple.

Cette tension Vcc est produite par redressement d'une basse tension alternative prélevée par exemple sur le transformateur 18 (figure 1). Dans une disposition préférentielle non représentée on peut prévoir que lorsque le circuit de balayage a été mis en route, une tension redressée et filtrée, issue du transformateur de ligne, prend le relais de la tension redressée et filtrée issue du transformateur 18 pour créer la tension Vcc.

La première armature de la capacité C3 est également reliée à un moyen de charge (source de courant 34) et à un moyen de décharge (source de courant 36) capables de charger et décharger la capacité relativement lentement, c'est-à-dire en quelques dizaines ou mêmes centaines de millisecondes. Cette armature est également reliée à un limiteur de tension (diode Zener 38 et éventuellement des diodes supplémentaires pour ajuster la tension de sortie de ce limiteur à une valeur de 6 à 7 volts). La source de courant 34 ne fonctionne qu'en présence du retour ligne RL.

Enfin, la première armature de la capacité C3 est reliée à l'entrée d'un comparateur à seuil 40 qui fournit un signal logique positif lorsque la tension sur cette armature dépasse un seuil VS4 (environ 6 volts).

La sortie de ce comparateur 40 est appliquée à une entrée d'une porte ET 42 dont une autre entrée reçoit la sortie d'un décodeur 44 placé en sortie d'un compteur 46 de manière que la porte ET s'ouvre en principe lorsque le seuil VS4 est dépassé, sauf lorsqu'un contenu prédéterminé du compteur 46 est atteint.

La sortie de la porte ET 42 est reliée à une entrée d'une porte OU 48 dont une autre entrée reçoit un signal de remise à zéro RAZ destiné à l'entrée de rétablissement R d'une bascule bistable 50 dont la sortie commande l'incrémentation du compteur 46. Ce dernier peut être remis également à zéro par le signal RAZ qui est issu d'un circuit logique non représenté produisant un niveau logique de remise à zéro de la bascule et du compteur soit lorsque Vcc passe au-dessous d'un seuil inférieur VS5 d'une valeur d'environ 4 volts (c'est-à-dire en fait lorsque le récepteur est remis sous tension après un arrêt complet), soit au bout d'une durée déterminée.

La bascule 50 reçoit un signal de commande de basculement d'une porte ET 52 dont une entrée reçoit le signal de retour de ligne RL issu du balayage horizontal et une autre entrée reçoit la sortie d'un comparateur à seuil 54 fournissant un niveau logique haut lorsqu'une surtension apparaît sur une borne de sécurité 55 reliée à un point critique du récepteur.

Une borne d'entrée du comparateur 54 reçoit à cet effet la tension issue de ce point critique, tandis que l'autre entrée est portée à un potentiel de référence VS3.

Le dépassement de ce seuil fait basculer la bascule 50 lors du premier retour ligne RL qui suit ce dépassement (donc à condition que le balayage horizontal fonctionne). Ce basculement incrémente le compteur et provoque l'arrêt des circuits de balayage horizontal et vertical ; par exemple, la sortie de la bascule 50 est reliée, par l'intermédiaire d'une porte OU 56, au circuit 10 de commande de balayage horizontal et au circuit 14 de commande de balayage vertical, pour inhiber le fonctionnement de ces deux circuits. La porte OU 56 reçoit par ailleurs un signal logique issu d'un comparateur à seuil 60 qui fournit aussi un signal d'inhibition des circuits de commande de balayage lorsque la tension d'alimentation Vcc descend au-dessous d'un seuil VS1 (environ 6 volts) notablement plus grand que le seuil VS5 au-dessous duquel on établit le signal de remise à zéro RAZ.

Enfin, un dernier comparateur à seuil 62 compare la tension Vcc à un seuil VS2 (environ 9 volts) plus grand que VS1 et transmet, à travers une porte ET 64 recevant le retour ligne RL et une porte OU 66, un signal d'inhibition de l'alimentation à découpage, par exemple un signal d'inhibition du comparateur 24 établissant les créneaux de largeur variable, lors du premier retour de ligne suivant le passage de la tension Vcc au-dessous du seuil VS2.

Une autre entrée de la porte OU 66 provient de la sortie de la porte OU 56.

Tous les comparateurs à seuil 60, 62 comparant Vcc à un seuil ont été représentés avec une entrée à Vcc et une autre au seuil désiré. En pratique, on préférera comparer une tension KVcc à un seuil qui peut être commun à tous les comparateurs, le coefficient K variant d'un comparateur à l'autre et pouvant être défini par des ponts diviseurs. Le seuil commun peut être une référence de 1,26 volt qu'on sait produire facilement (référence « band-gap ») et qui présente une très bonne stabilité en température.

On va maintenant expliquer le fonctionnement des différentes parties du circuit dans le cas de la mise en marche du récepteur, dans le cas de l'arrêt et, également, dans le cas de surtensions répétées se produisant en un point critique du récepteur.

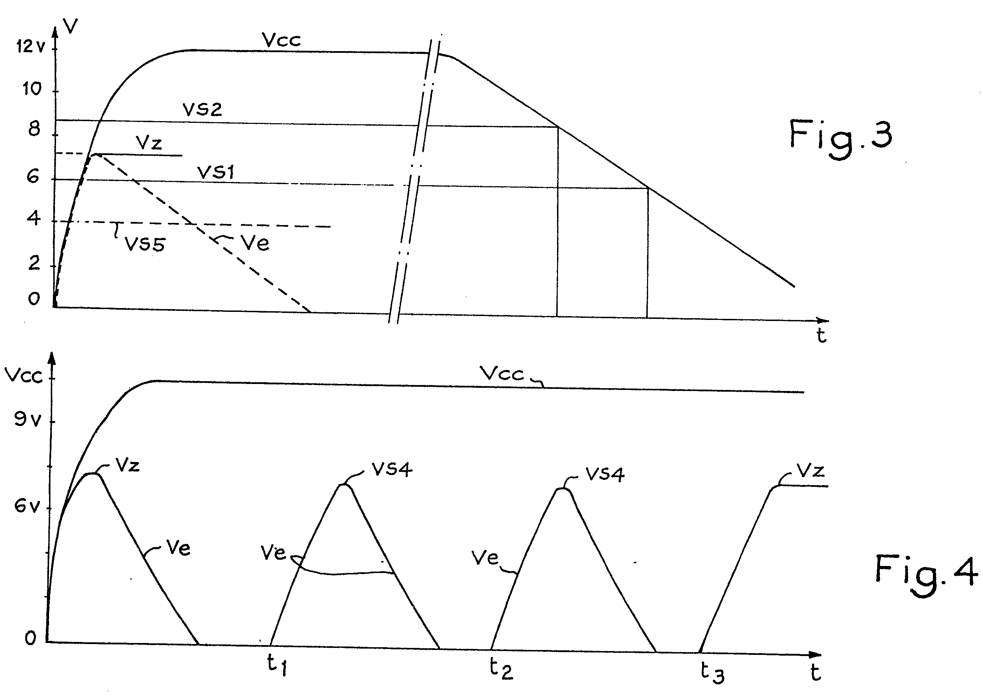

La figure 3 montre un diagramme temporel de tensions au moment de la mise en route du récepteur et au moment de son arrêt.

A la mise en route (instant zéro), la tension Vcc s'établit rapidement à sa valeur nominale de 12 volts (courbe supérieure sur la figure 3).

La capacité C3 est initialement déchargée et sa première armature (reliée à E1) présente un potentiel Ve qui suit initialement celui de l'autre armature, donc Vcc, ceci jusqu'à une valeur Vz imposée par le limiteur (diode Zener 38). Cette valeur est d'environ 7 volts.

Avant d'atteindre Vz, la tension Vcc passe par une phase où elle est inférieure au seuil VS5 d'environ 4 volts déclenchant la remise à zéro de la bascule 50 et du compteur 46. Puis Vcc passe par le seuil VS1 (environ 6 volts), ce qui déclenche (par le comparateur 60) la mise en route simultanée du balayage horizontal et du balayage vertical (qui peuvent fonctionner avec une tension Vcc d'environ 6 volts).

L'apparition du balayage horizontal engendre un signal périodique RL au niveau du transformateur de balayage horizontal. Ce signal autorise le fonctionnement de la source de courant 34 (dont l'amplitude moyenne est plus grande que celle de la source de courant 36), de sorte que la capacité C3 commence à se charger, ce qui réduit le potentiel Ve avec une constante de temps de quelques dizaines de millisecondes. La décroissance de Ve est sensiblement linéaire en moyenne, mais elle s'effectue en réalité en marches d'escalier, chaque créneau RL provoquant une petite décharge de la capacité. Entretemps, presque aussitôt après le début du balayage, la tension Vcc a franchi le seuil VS2 (environ 9 volts), ce qui autorise le fonctionnement de l'alimentation à découpage.

Le potentiel Ve est donc au départ d'environ 7 volts, soit largement supérieur à la tension de commande de régulation appliquée à l'alimentation à découpage. Cette dernière tension a en effet tendance à être à son minimum pour produire, par comparaison avec la dent de scie DSD, des créneaux de grande largeur. En fait, la tension Ve est transmise prioritairement à travers le transistor T3 de sorte que des créneaux de faible largeur sont produits ; la largeur des créneaux croît à mesure que Ve diminue ; l'alimentation à découpage se met progressivement à son régime de fonctionnement normal et la tension de commande de régulation croît. On se situe ainsi dans une phase de démarrage progressif de l'alimentation.

Au bout d'un certain temps, la tension Ve a diminué dans une mesure telle qu'elle devient inférieure à la tension de commande de régulation qui, elle-même, a augmenté comme la tension de sortie de l'alimentation. La tension de commande de régulation prend donc alors le relais de la tension Ve dans le moyen de transmission prioritaire 32 et on entre dans une phase de régulation normale de l'alimentation.

Du fait que l'alimentation à découpage ne peut commencer à fonctionner que si Vcc est plus grand que VS2 (9 volts) alors que le balayage fonctionne déjà à partir de VS1 (6 volts), le retour ligne RL est toujours présent ainsi que la dent de scie DSC pour assurer un fonctionnement correct de l'alimentation à découpage.

Lors de l'arrêt du récepteur de télévision, Vcc va décroître progressivement faute d'alimentation par le secteur. Lorsque Vcc descend au-dessous de VS2 (9 volts), le fonctionnement de l'alimentation à découpage est inhibé dès le premier retour ligne RL suivant ce dépassement (comparateur 62 et porte ET 64). On arrête ainsi l'alimentation dans l'état bloqué du transistor T2 (figure 1).

Vcc descend ensuite au-dessous de VS1 (6 volts), ce qui arrête le balayage. Entretemps, la tension de sortie de l'alimentation a baissé de sorte que la très haute tension a elle-même baissé ; le faisceau électronique n'est donc plus aussi intense lorsque le balayage s'arrête et on ne risque pas de griller un point de l'écran par un faisceau immobile intense.

Le cas de l'apparition de surtensions en un point critique du circuit va maintenant être exposé en référence au diagramme de tensions de la figure 4 qui montre le potentiel Vcc à partir de la mise en route du récepteur et le potentiel Ve à partir de la mise en route et après l'apparition de trois surtensions successives qui sont par exemple dues à une décharge ionisante dans le tube cathodique au début de sa durée de vie.

A la mise en route (instant zéro), le potentiel Vcc croît de zéro à 12 volts. Le potentiel Ve le suit et se stabilise à Vz (environ 7 volts), après quoi Ve décroît lentement pour établir la phase de démarrage progressif de l'alimentation à découpage, comme cela a été expliqué en référence à la figure 3.

On suppose qu'une surtension se produit à l'instant $t_1$, créant à l'entrée du comparateur 54 un dépassement du seuil VS3 (qui peut être réglé à volonté selon les surtensions qu'on veut détecter). Le comparateur 54 fournit donc un signal qui fait basculer la bascule 50 au premier retour ligne RL suivant le dépassement. Le compteur 46, initialement mis à zéro car Vcc est passé par un niveau inférieur à 4 volts à la mise en route du récepteur, est incrémenté d'une unité.

En même temps, la sortie de la bascule envoie à travers la porte OU 56 un signal d'inhibition du balayage horizontal et du balayage vertical ainsi que de l'alimentation à découpage (par la porte OU 66).

Le balayage horizontal n'existant plus, la source de courant 34 ne peut plus maintenir la capacité C3 chargée, et la source de courant 36 commence à le décharger relativement lentement, ce qui fait remonter le potentiel Ve.

Lorsque Ve atteint le seuil VS4, le comportement 40 envoie un signal logique qui remet à zéro la bascule 50, provoquant du même coup le redémarrage des balayages et de l'alimentation à découpage (la tension Vcc n'ayant pas changé entretemps sa valeur de 12 volts).

Le balayage horizontal fait réapparaître le signal périodique de retour de ligne RL et la source de courant 34 peut à nouveau charger C3 pour faire descendre progressivement le potentiel Ve ; une nouvelle phase de démarrage progressif de l'alimentation a lieu.

De nouvelles surtensions peuvent se produire, par exemple à $t_2$ et $t_3$ et le processus est le même, sauf si le compteur 46 atteint un contenu tel que le décodeur 44 fournisse un signal de blocage de la porte ET 42, donc de blocage de la remise à zéro de la bascule 50. Par exemple, si le décodeur est programmé pour fournir un signal de blocage lorsque le contenu du compteur marque la troisième surtension successive sans remise à zéro (et on rappelle que la remise à zéro peut avoir lieu soit à l'extinction du récepteur, soit au bout d'une durée déterminée), la surtension apparaissant à l'instant $t_3$ provoquera encore l'arrêt simultané du balayage et de l'alimentation à découpage au premier retour ligne suivant l'apparition de la surtension, donc la remontée du potentiel Ve. Mais, le décodeur 44 empêchera la remise à zéro de la bascule donc le démarrage des circuits de balayage et de l'alimentation, et le potentiel Ve se stabilisera à la valeur Vz imposée par le limiteur. Un nouveau démarrage ne sera possible que par extinction et remise en route du récepteur.

On peut choisir à volonté le nombre de surtensions et la durée pendant laquelle ces surtensions peuvent se produire sans entraîner un arrêt définitif des circuits de balayage. L'horloge déterminant la durée pendant laquelle n surtensions rapprochées (par exemple trois) ne doivent pas se produire peut être réalisée à partir d'une bascule monostable (non représentée) déclenchée par le premier changement d'état du compteur, ou par tout autre dispositif de temporisation. On peut imaginer aussi que le compteur et la bascule soient remis à zéro périodiquement toutes les 20 milli-secondes par le retour à zéro du balayage vertical.

A la figure 5 on a montré un détail de réalisation avec un perfectionnement supplémentaire. Le circuit de la figure 1 est inchangé mais on n'a représenté de ce circuit que la capacité C3 et les sources de courant 34 et 36.

Les sources de courant 34 et 36 fournissent un courant de même amplitude mais elles sont actionnées pendant des intervalles de temps périodiques différents. L'intervalle de temps de commande de la source 34 dure 4 microsecondes à chaque période (si toutefois le signal RL est présent) ; cet intervalle de temps est établi par un circuit logique et se situe dans la durée du signal RL. L'intervalle de temps de commande de la source 36 dure 2 microsecondes à chaque période du balayage horizontal et peut être engendré à partir d'une horloge à 500 kHz et d'un circuit logique laissant passer une seule impulsion d'horloge à chaque période de balayage horizontal.

En présence du signal RL, la valeur moyenne des courants débités fait que la capacité C3 se charge. En l'absence de RL, la capacité se décharge.

Par ailleurs, on peut prévoir que la tension Ve est limitée en valeur inférieure par une tension issue d'un pont diviseur alimenté par la tension Vcc. Une diode reliant en polarisation directe le pont diviseur à la première armature de la capacité C3 empêche le potentiel Ve de descendre au-dessous d'une valeur déterminée. Ceci entraîne nécessairement une limitation absolue dans la largeur des créneaux que peut fournir le comparateur 24 de l'alimentation à découpage.

Si le circuit de balayage du récepteur est réalisé sous forme intégrée (à l'exception des éléments de puissance), la capacité C3 est extérieure au circuit intégré, ainsi que le pont diviseur et la diode, afin que la largeur maximale des créneaux puisse être réglée à volonté.

Dans la description qui précède, on a indiqué que la première armature de la capacité C3 devait suivre rapidement le potentiel Vcc lors de la mise en route du récepteur. On reliait pour cela la seconde armature à la source de basse tension Vcc. On pourrait aussi relier cette seconde armature à la masse et prévoir une source de courant supplémentaire relativement intense et actionnée uniquement pour Vcc inférieur à un seuil de 8 à 10 volts. Cette source serait parallèle à la source 36 et serait hors service lorsque Vcc atteindrait sa valeur nominale de 12 volts.

**Revendications**

1. Circuit de commande de balayage, pour un récepteur de télévision pourvu d'une alimentation à découpage comprenant un interrupteur (T2) commandé par un comparateur (24) produisant des créneaux de largeur variable par comparaison d'une tension de commande de régulation appliquée sur une première entrée du comparateur et d'une tension périodique en dent de scie appliquée sur une deuxième entrée, ce circuit étant caractérisé par le fait qu'il comprend en outre, en vue d'assurer le démarrage, progressif du balayage,

— une capacité (C3), disposée à l'entrée,

— un moyen (36) pour faire suivre rapidement à une première armature de la capacité le potentiel d'une source à basse tension lorsque cette basse tension croît à partir de zéro jusqu'à une valeur Vz,

— un moyen de transmission prioritaire (32) ayant une première entrée (E1) reliée à la première armature de la capacité, une deuxième entrée (E2) recevant la tension de commande de régulation, et une sortie (S) reliée à la première entrée du comparateur, pour appliquer prioritairement à cette dernière celle des deux tensions qui définit des créneaux de plus faible largeur pour la mise en conduction de l'interrupteur commandé, la valeur de la tension Vz étant choisie telle que lorsqu'elle est atteinte et lorsque l'alimentation à découpage fonctionne, elle soit transmise prioritairement au comparateur (24) et engendre des créneaux plus courts que la durée maximale possible pour les créneaux en fonctionnement normal,

— un moyen (34) pour modifier progressivement la charge de la capacité (C3) de manière que ladite première armature voie son potentiel se modifier progressivement jusqu'à cesser de devenir prioritaire.

2. Circuit selon la revendication 1, caractérisé par le fait que la capacité (C3) a son autre armature portée au potentiel de la source à basse tension (Vcc).

3. Circuit selon l'une des revendications 1 et 2, caractérisé par le fait que le moyen pour modifier progressivement la charge de la capacité (C3) est une source de courant (34) commandée de manière à ne débiter du courant que pendant les impulsions de retour de ligne (RL) du circuit de balayage, afin que la modification progressive de charge ne s'effectue que lorsque le balayage horizontal fonctionne.

4. Circuit selon l'une des revendications 1 à 3, caractérisé par le fait qu'il comporte un comparateur à seuil (60) fournissant un signal d'inhibition du balayage horizontal et du balayage vertical lorsque la tension de la source de basse tension (Vcc) est inférieure à un premier seuil (VS1).

5. Circuit selon la revendication 4, caractérisé par le fait qu'il comporte un autre comparateur à seuil (62) fournissant un signal d'inhibition de l'alimentation à découpage lorsque la tension de la source à basse tension est inférieure à un seuil (VS2) plus grand que le seuil VS1.

6. Circuit selon la revendication 5, caractérisé par le fait qu'il comporte un opérateur logique (64) recevant la sortie du comparateur (62) et un signal de retour de ligne (RL) issu du balayage horizontal, pour inhiber l'alimentation à découpage lors du premier retour de ligne suivant le passage de la tension Vcc au-dessous du seuil VS2.

7. Circuit selon l'une des revendications 1 à 6, caractérisé par le fait qu'il est prévu une borne de sécurité (55) susceptible d'être reliée à un point critique du récepteur en vue de contrôler les surtensions en ce point, un comparateur à seuil (54) relié à cette borne et fournissant un signal en cas de surtension, une bascule (50) susceptible de basculer lors de la réception de ce signal et d'inhiber le balayage horizontal, le balayage vertical et l'alimentation à découpage, un deuxième moyen (36) de modification de la charge de la capacité (C3), agissant pour modifier le potentiel de ladite première armature de la capacité pour le rendre à nouveau prioritaire par rapport à la tension de commande de régulation, un circuit de réinitialisation de la bascule comprenant un comparateur à seuil détectant le passage de la tension sur la première armature au-dessus d'un seuil (VS4).

8. Circuit selon la revendication 7, caractérisé par le fait que le circuit de réinitialisation de la bascule comporte un compteur (46) et un circuit logique pour interdire la réinitialisation si la bascule a reçu un nombre d'ordres de basculement supérieur à un nombre déterminé dans un temps déterminé.

9. Circuit selon l'une des revendications 1 à 8, caractérisé par le fait que le moyen de transmission prioritaire comporte deux transistors (T3, T4) dont les bases forment les entrées du moyen et dont les émetteurs reliés forment la sortie.

**Claims**

1. Scanning control circuit, for a television receiver provided with a chopped current source comprising a switch (T2) controlled by a comparator (24) producing square-shaped pulses of variable width by comparison of a regulation control voltage applied to a first input of the comparator to a saw-toothed shaped periodic voltage applied to a second input, this circuit being characterized by the fact that it comprises, furthermore, with a view to effecting the progressive starting-up of the scanning :

— a capacitor (C3) disposed at the input ;

— means (36) to cause to rapidly follow at a first plate device of the capacitor the potential of a low voltage source when this low voltage increases from zero to a value Vz ;

— priority transmission means (32) having a first input (E1) connected to the first plate device of the capacitor, a second input (E2) receiving the regulation control voltage, and an output (S) connected to the first input of the comparator, to apply in priority to this latter that of the two voltages that defines the smallest width square-shaped pulses to put the controlled switch in conduction, the value of the voltage Vz being selected to that when it is reached and when the chopped currentsupply operates, it is transmitted in priority to the comparator (24) and produces shorter square-shaped voltages than the maximal duration possible for the square-shaped pulses in normal operation ;

— a means (34) to progressively modify the charge of the capacitor (C3) in such a way that the said first plate device has its potential progressively modified until it ceases to have priority.

2. Circuit according to claim 1, characterized by the fact that the capacitor (C3) has its other plate device at the low voltage source potential (Vcc).

3. Circuit according to one of claims 1 and 2, characterized by the fact that the means for progressively modifying the charge of the capacitor (C3) is a current source (34) controlled so as to only deliver a current during the line return pulses (RL) of the scanning circuit, in order that the progressive charge modification is only carried out when the horizontal scanning operates.

4. Circuit according to one of claims 1 to 3, characterized by the fact that it comprises a threshold comparator (60) supplying a horizontal scanning and vertical scanning inhibition signal when the low supply voltage (VCC) is lower than a first threshold (VS1).

5. Circuit according to claim 4, characterized by the fact that it comprises another threshold comparator (62) supplying an inhibition signal of the chopped current source when the low voltage supply voltage is lower than a threshold (VS2) higher than threshold VS1.

6. Circuit according to claim 5, characterized by the fact that it comprises a logic operator (64) receiving the output of the comparator (62) and a line return signal (RL) issuing from the horizontal scanning to inhibit the chopped current source during the first return of the line following the passage of the voltage Vcc below the threshold VS2.

7. Circuit according to any one of claims 1 to 6, characterized by the fact that it is provided with a safety terminal (55) able to be connected to a critical point of the receiver with a view to controlling the over-voltages in the point, a threshold comparator (54) connected to this terminal and supplying a signal in case of overvoltage, a flip-flop (50) able to switch over upon reception of this signal and to inhibit the horizontal scanning, the vertical scanning and the chopped current source, a second means (36) for modifying the charge of the capacitor (C3), acting to modify the potential of the said first plate device of the capacitor to render it again privileged with respect to the regulation control circuit voltage, a reinitialization circuit of the flip-flop comprising a threshold comparator detecting the passage of the voltage on the first plate device above a threshold (VS4).

8. Circuit according to claim 7, characterized by the fact that the reinitialization circuit of the flip-flop comprises a counter (46) and a logic circuit to prohibit reinitialization if the flip-flop has received a number of switching orders above a determined number in a determined time.

9. Circuit according to one of claims 1 to 8, characterized by the fact that the priority transmission means comprises two transistors (T3, T4) of which the bases form the input of the means and of which the connected emitters form the output.

## Ansprüche

1. Abtaststeuerkreis für einen Fernsehempfänger, der mit einer Stossstromversorgung ausgestattet ist, die einen Unterbrecher (T2) enthält, der durch einen Komparator (24) gesteuert wird, welcher rechteckige Signale mit variabler Breite durch Vergleich einer an einen ersten Eingang des Komparators gelieferten und einer an einen zweiten Eingang gelieferten periodischen Sägezahnspannung liefert, wobei dieser Kreis dadurch gekennzeichnet ist, dass er weiter folgende Elemente, um den stetigen Ablauf der Abtastung zu gewährleisten, enthält :

— eine am Eingang angeordnete Kapazität (C3),

— ein Mittel (36), um einem ersten Belag der Kapazität schnell das Potential einer Niederspannungquelle folgen zu lassen, wenn diese Niederspannung von null auf einen Wert Vz steigt,

— ein bevorrechtigtes Übertragungsmittel (32), das einen ersten Eingang (E1) hat, der mit dem ersten Belag der Kapazität verbunden ist, das einen zweiten Eingang (E2) hat, der die Regelsteuerspannung empfängt und das einen Ausgang (S) hat, der mit dem ersten Eingang des Komparators verbunden ist, um bevorrechtigterweise diesem letzten diejenige der beiden Spannungen anzulegen, die die rechteckigen Signale geringster Breite definiert, für die Inleitung-Setzung des gesteuerten Unterbrechers, wobei der Spannungswert Vz so gewählt ist, dass, wenn er erreicht wird und wenn die Stossstromversorgung funktionniert, er bevorrechtigterweise dem Komparator (24) übermittelt wird und rechteckige Signale erzeugt, welche kürzer als die maximal mögliche Dauer für die rechteckigen Signale in normaler Arbeitsweise sind,

— ein Mittel (34), um kontinuierlich die Ladung der Kapazität (C3) zu verändern, so dass das Potential des ersten Belags sich kontinuierlich verändert, bis es aufhört, bevorrechtigt zu sein.

2. Kreis nach Anspruch 1, dadurch gekennzeichnet, dass der andere Belag der Kapazität (C3) auf das Potential der Niederspannungsquelle (Vcc) gebracht wird.

3. Kreis nach einem der Ansprüche 1 und 2, dadurch gekennzeichnet, dass das Mittel zur kontinuierlichen Veränderung der Ladung der Kapazität (C3) eine Stromquelle (34) ist, die derart gesteuert wird, dass sie Strom nur während der Zeilenrücklaufimpulse (RL) des Abtastkreises liefert, damit die kontinuierliche Veränderung der Ladung nur dann stattfindet, wenn die waagrechte Abtastung funktioniert.

4. Kreis nach einem der Ansprüche 1 bis 3, dadurch gekennzeichnet, dass er einen Schwellenkomparator (60) enthält, der ein Signal zur Sperrung der waagrechten Abtastung und der senkrechten Abtastung liefert, wenn die Spannung der Niederspannungsquelle (Vcc) niedriger als erste Schwelle (VS1) ist.

5. Kreis nach Anspruch 4, dadurch gekennzeichnet, dass er einen anderen Schwellenkomparator (62) enthält, welcher ein Signal zur Sperrung der Stossstromversorgung liefert, wenn die Spannung der Niederspannungsquelle niedriger als eine Schwelle (VS2) ist, welche grösser als die Schwelle (VS1) ist.

6. Kreis nach Anspruch 5, dadurch gekennzeichnet, dass er ein logisches Gatter (64) enthält, das den Ausgang des Komparators (62) und ein von der waagrechten Abtastung ausgehendes Zeilenrücklaufsignal (RL) empfängt, um die Stossstromversorgung während des ersten Zeilenrücklaufs, der der Unterschreitung der Spannung (Vcc) unter der Schwelle (VS2) folgt zu sperren.

7. Kreis nach einem der Ansprüche 1 bis 6, dadurch gekennzeichnet, dass ein Sicherheitsanschluss (55) vorgesehen ist, welcher mit einem kritischen Punkt des Empfängers zur Überwachung der Überspannungen in diesem Punkt, verbunden werden kann, ein mit diesem Anschluss verbundener Schwellenkomparator (54) und der ein Signal im Falle einer Überspannung erzeugt, eine Kippschaltung (50), welche beim Empfang dieses Signals umkippen kann und die waagrechte Abtastung, die senkrechte Abtastung und die Stossstromversorgung sperren kann, ein zweites Mittel (36) zur Veränderung der Ladung der Kapazität (C3), das tätig wird, um das Potential des Belags der Kapazität zu verändern, um ihn erneut bevorrechtigt gegenüber der Regelsteuerspannung zu machen, ein Stromkreis zur Reinitialisierung der Kippschaltung, welcher einen Schwellenkomparator enthält, der die Überschreitung der Spannung des ersten Belages über eine Schwelle (VS4) entdeckt.

8. Kreis nach Anspruch 7, dadurch gekennzeichnet, dass der Stromkreis zur Reinitialisierung der Kippschaltung einen Komparator (46) und einen logischen Stromkreis enthält, um die Reinitialisierung zu unterbinden, wenn die Kippschaltung eine Anzahl von Kippbefehlen empfangen hat, die grösser als gegebene Zahl in einer gegebenen Zeit sind.

9. Kreis nach einem der Ansprüche 1 bis 8, dadurch gekennzeichnet, dass das bevorrechtigte Übertragungsmittel zwei Transistoren (T3, T4) enthält, deren Basis die Eingänge des Mittels bilden, und deren verbundens Emitter den Ausgang bilden.

Fig.1

# 0 080 915

Fig.2

Fig.5

2

Fig.3

Fig.4

0 080 915